Europäisches Patentamt

European Patent Office

Office européen des brevets

(11) Numéro de publication: **0 144 109**
**B1**

# (12) FASCICULE DE BREVET EUROPEEN

(45) Date de publication du fascicule du brevet:
14.06.89

(51) Int. Cl.⁴: **G 01 N 1/28, G 01 N 23/223**

(21) Numéro de dépôt: **84201732.9**

(22) Date de dépôt: **28.11.84**

(54) **Procédé automatique de dosage d'échantillon et machine automatique pour doser et analyser.**

(30) Priorité: **02.12.83 FR 8319290**

(43) Date de publication de la demande:
**12.06.85 Bulletin 85/24**

(45) Mention de la délivrance du brevet:
**14.06.89 Bulletin 89/24**

(84) Etats contractants désignés:
**DE FR GB NL**

(56) Documents cités:
**FR-A- 2 485 733**

(73) Titulaire: **S.A. PHILIPS INDUSTRIELLE ET COMMERCIALE, 50 Avenue Montaigne, F-75008 Paris (FR)**

(84) Etats contractants désignés: **FR**

(73) Titulaire: **N.V. Philips' Gloeilampenfabrieken, Groenewoudseweg 1, NL-5621 BA Eindhoven (NL)**

(84) Etats contractants désignés: **DE GB NL**

(72) Inventeur: **Naudi, Alain, SOCIETE CIVILE S.P.I.D. 209, rue de l'Université, F-75007 Paris (FR)**

(74) Mandataire: **Charpail, François et al, Société Civile S.P.I.D. 209, rue de l'Université, F-75007 Paris (FR)**

## Description

La présente invention concerne un procédé automatique de dosage pour doser dans une nacelle de pesée d'une balance de mesure continue un mélange d'un échantillon à analyser et d'un fondant, par exemple du tétraborate de lithium, le mélange dosé obtenu étant destiné à être fondu dans un creuset pour, après refroidissement, former une solution solide dans un verre au lithium appelée «perle» qui est ensuite analysée, par exemple au moyen d'un spectromètre de fluorescence des rayons X, et une machine pour doser et analyser automatiquement le dit mélange.

La technique de la solution solide ou perle est bien connue dans l'industrie de la cimenterie et aussi dans la sidérurgie.

Les creusets utilisés pour la fusion sont connus par exemple par la demande de brevet européen n° 0 042 327 de l'IRSID où un creuset en platine et un creuset en carbone vitreux sont décrits; de même le four à induction de préparation automatique des perles à partir d'un mélange, échantillon plus fondant, est aussi connu par exemple par la demande de brevet français publiée sous le n° 2 381 303 et son certificat d'addition n° 2 428 834 également de l'IRSID.

Les machines dites «perleuses» et «spectromètres» sont bien connues et certaines sont commercialisées par la demanderesse par exemple les machines connues sous le nom «PERL'X-2» et «PW 1600/10».

Hier encore, le dosage du mélange échantillon et fondant au moyen d'une bascule électronique connue du mélange échantillon, était effectué manuellement, ainsi que le transfert du mélange dans un creuset, et ainsi que le transfert de la perle dans le spectromètre; mais on constate une tendance actuelle à automatiser au maximum les diverses opérations et ceci surtout dans la cimenterie ainsi que le révèle la demande de brevet français n° 2 485 733.

Dans cette demande un dispositif automatique de fabrication d'échantillons est décrit; ce dispositif comporte notamment un appareil de pesée alimenté successivement en échantillon puis en fondant, un bras manipulateur pour transférer les uns après les autres les creusets à partir de l'appareil de pesée jusqu'au four à induction.

Ceci ne va pas sans inconvénient car d'une part l'échantillon étant plus «collant» que le fondant il a tendance à coller sur les parois des récipients à cause de sa moins bonne aptitude à s'écouler et d'autre part chaque creuset étant très cher, la «noria» de creusets est une solution chère.

A cet effet le procédé automatique de dosage selon la revendication a pour but de remédier à ces inconvénients.

De ce fait, il est possible d'effectuer la pesée dans une nacelle de pesée unique dont le prix est infiniment inférieur au prix d'un creuset.

Le procédé revendiqué présente l'avantage que le contenu de la nacelle de pesée peut être renversé, par exemple, directement dans le creuset du four à induction, le dit creuset étant avantageusement choisi en carbone vitreux; ainsi la machine automatique mettant en œuvre le procédé selon l'invention ne comporte qu'une seule nacelle de pesée et qu'un seul creuset ce qui procure une forte économie lors de l'exploitation industrielle de la machine.

La présente invention présente bien d'autres avantages que l'on comprendra mieux avec la description d'un exemple de réalisation selon un mode préféré non limitatif, et à l'aide des figures annexées.

– La figure 1 représente une nacelle de pesée
– La figure 2 représente schématiquement le manipulateur de la nacelle de pesée
– La figure 3 représente une vue de dessus d'une partie du manipulateur
– La figure 4 représente le couvercle du creuset
– La figure 5 représente un schéma de l'ensemble de la machine.

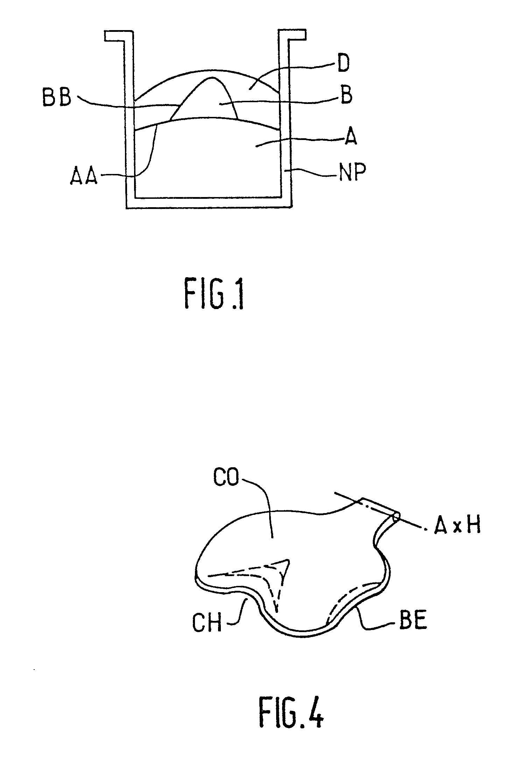

Sur la figure 1 est représentée une nacelle de pesée (NP) qui a été remplie selon l'invention en trois étapes pour profiter des angles de talus d'éboulement respectifs.

La première étape a) a pourvu la nacelle (NP) d'une couche de fondant (A) dont la surface (AA) est assez peu bombée conformément à l'angle de talus d'éboulement du tétraborate de lithium qui est un produit assez «fluide»; la deuxième étape b) a pourvu la nacelle (NP) d'une couche de l'échantillon à analyser (B) dont la surface (BB) est nettement plus pointue de telle sorte que sa base ne soit pas en contact avec les parois latérales de la nacelle de pesée (NP); la troisième étape d) a pourvu la nacelle (NP) d'une couche de fondant (D) qui d'une part vient s'interposer entre la couche d'échantillon (B) et les parois de la nacelle, et d'autre part fait le complément de poids de fondant avec la couche (A) pour que le dosage du mélange obtenu soit conforme aux valeurs souhaitées.

L'alimentation de la nacelle de pesée est effectuée à partir de trémies avec vibreur et avec goulotte de déversement dans la nacelle de pesée; la nacelle est posée sur le plateau d'une balance en continu électronique et programmable dont les indications servent à commander l'action des vibreurs; ces divers dispositifs d'alimentation ne sont pas représentés car ils sont bien connus de l'homme du métier de l'automatisme qui peut se procurer par exemple la balance chez le constructeur METLER et les vibreurs auprès de la S$^{té}$ BERNAY; à titre indicatif on peut choisir une balance qui mesure en continu le poids à 0,01 g près et qui, lorsque les vibreurs sont arrêtés c'est-à-dire quand le contenu de la nacelle est stabilisé, effectue alors une mesure à 0,001 g près.

Ainsi ayant programmé le système adéquatement en suivant les indications fournies par le constructeur de la balance programmable, on obtient

a) pour la couche A de fondant un poids-réel $FR_1$ assez proche d'un poids-cible $FC_1$; l'arrêt du vibreur du fondant permet une mesure à 0,001 g près de $FR_1$ qui est mémorisé,

b) pour la couche B d'échantillon un poids-réel ER assez proche d'un poids-cible EC, l'arrêt du vibreur de l'échantillon permet une mesure à 0,001 g près de ER; cette valeur ER est d'une part mémorisée d'autre part utilisée pour calculer le poids total souhaité, ou poids-cible, de fondant d'où l'on déduit, compte tenu de FR1, le poids-cible manquant FC2 en fondant.

d) pour la couche C de fondant, le vibreur du fondant est à nouveau mis en action pour obtenir un poids réel de fondant FR2 aussi proche que possible du poids-cible FC2 qui a été calculé comme susdit.

Il est recommandé d'utiliser de préférence le rapport

$$FC1 = \frac{4}{5} \times (FC1 + FC2)$$

pour bien profiter des angles de talus d'éboulement.

Le contenu final de la nacelle est vérifié pour conformité avec les objectifs de poids et de proportion (dosage) du mélange préalablement fixés; si le contenu final est satisfaisant, le dosage est terminé; sinon le dosage en cours est abandonné, le contenu de la nacelle est évacué et un nouveau dosage est initialisé; on notera qu'un dosage ne peut être mauvais que par excès d'un des composants, par exemple par éboulement d'un grain plus gros, car un manque serait immédiatement compensé par l'action du vibreur correspondant.

Le rapport

$$\frac{FR1 + FR2}{ER} = RFEO$$

doit être aussi proche que possible d'une valeur cible RFEC choisie par exemple parmi des valeurs comprises entre 3 et 15; la précision demandée peut être comprise entre $\pm\ 0,1\%$ et $\pm\ 2\%$; le choix de ces paramètres dépend de la nature de l'échantillon et du type d'industrie: cimenterie, sidérurgie ou autre.

Pour améliorer la précision du dosage, il est avantageux de décomposer l'étape b) et l'étape d) en deux étapes chacune à savoir:

   – pour l'étape b) les étapes

      – b') alimentation à vitesse rapide de l'échantillon pour un poids-cible EC1 égal à une fraction, par exemple un tiers, du poids-cible EC

   – et – c) alimentation à vitesse lente de l'échantillon pour un poids-cible EC2 égal au complément de la fraction EC1, donc par exemple deux tiers, du poids-cible EC

   – pour l'étape d) les étapes

      – d') alimentation à vitesse rapide du fondant pour un poids-cible FC21 égal à une fraction, par exemple trois quart, du poids-cible FC2, la vitesse de l'étape a), étant alors égale à la vitesse rapide de l'étape d')

   et – e) alimentation à vitesse lente du fondant pour un poids-cible FC22 égal au complément de la fraction FC21, donc par exemple un quart, du poids-cible FC2.

ainsi l'alimentation s'effectue sans perte de temps et avec précision; le changement de vitesse du vibreur s'effectue à la commande de la bascule de mesure en continu; des vibreurs à deux vitesses sont facilement approvisionnées auprès du constructeur déjà cité ou autre.

La commande de ces opérations s'effectue au moyen d'un automate programmable non décrit et non représenté car bien connu de l'homme du métier de l'automatisme.

Cet automate est normalement connectable à la bascule électronique en continu et aux vibreurs.

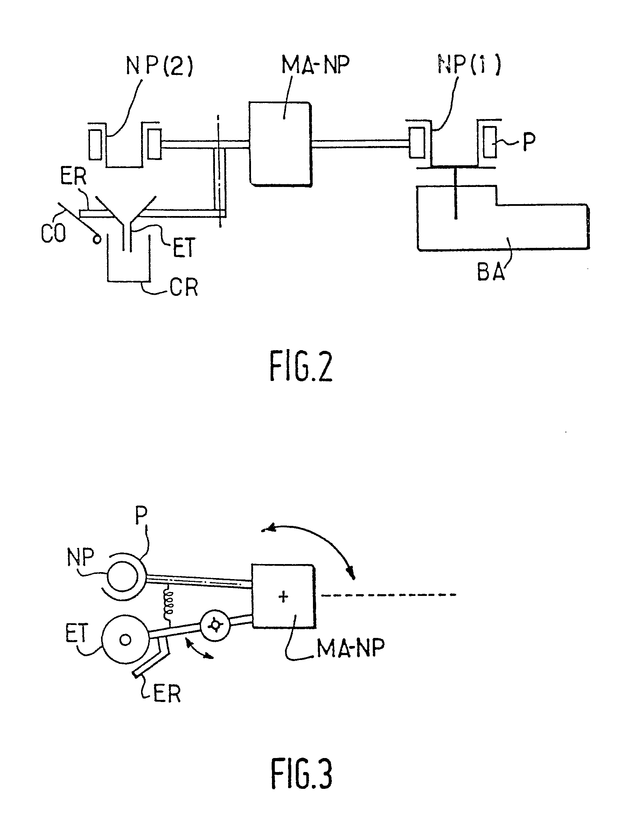

Dans la machine réalisée pour la mise en œuvre du procédé il est possible de n'utiliser qu'un seul creuset de fusion, d'où une économie importante; pour déverser le contenu de la nacelle de pesée dans le creuset, il est fait usage d'un bras manipulateur muni d'une pince (P), l'ensemble étant manœuvré par des vérins commandés par le dit automate programmable; les divers matériels nécessaires figurent par exemple au catalogue de la Sté NEW-MAT pour la pince et de la Sté CPOAC pour les vérins et les électrovannes; ainsi, comme schématiquement représenté sur la figure 2, le bras manipulateur de la nacelle de pesée (MA–NP) transfère, sous contrôle de l'automate non représenté, la nacelle de pesée (NP) de sa position de pesée (1) à une position de renversement (2) au-dessus du creuset (CR); du fait que le creuset (CR) est presque toujours chaud ($\pm\ 700\,°C$) en fonctionnement industriel, il est avantageux, selon l'invention, d'interposer un entonnoir (ET) en acier inox poli intérieurement (par exemple au diamant 4 μm) entre la nacelle et le creuset pour guider l'écoulement du mélange vers le fond du creuset; ainsi on évite que le mélange ne soit «soufflé» par les turbulences d'air chaud générées dans le creuset; l'entonnoir (ET) est monté sur le bras manipulateur (MA–NP) avec une liberté en rotation autour d'un axe vertical et une liberté en translation verticale supplémentaire; la translation verticale commandée par un électro-aimant, lui-même commandé par l'automate, a pour objet de permettre la descente, et la remontée de l'entonnoir dans le creuset et aussi de donner des secousses à l'entonnoir pour provoquer le déversement intégral du mélange dans le creuset, les secousses coopèrent avec le polissage intérieur de l'entonnoir; la liberté en rotation autour d'un axe vertical évite à l'entonnoir d'endommager la balance (BA) lorsque le bras est dans la position NP (1), un simple ressort de rappel, comme représenté sur la figure 3, suffit pour remettre ensuite l'entonnoir en bonne position pour le déversement de mélange dans le creuset.

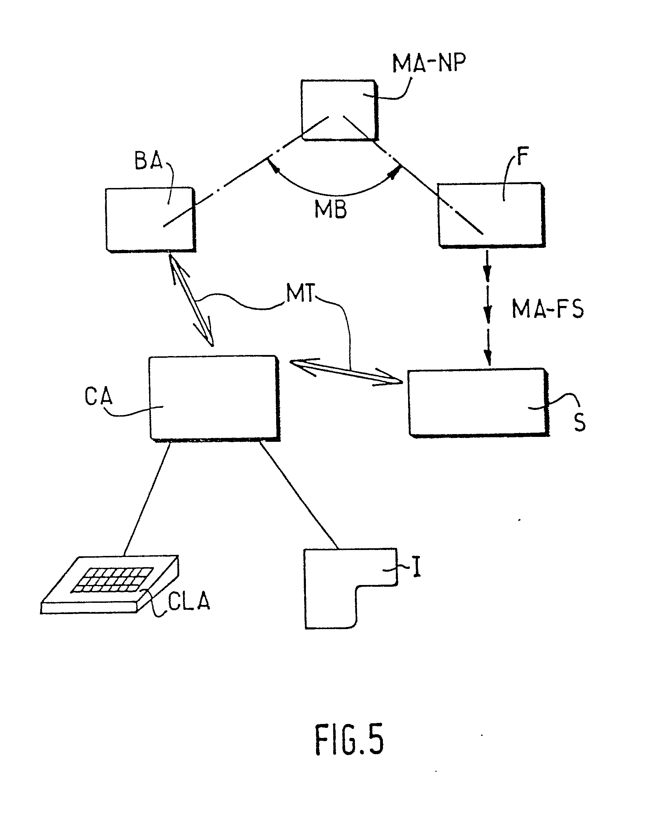

Avantageusement, le creuset est muni d'un couvercle (CO), figure 2, qu'il faut ouvrir pour le déversement du mélange dans le creuset et fermer le reste du temps; l'ouverture du couvercle est commandée par un ergot (ER), figures 2 et 3, qui entraîne le couvercle (CO) en prenant appui sur un becquet (BE) de celui-ci, figure 4; le couvercle pivote alors autour de son axe horizontal (AXH); lors de la fusion, le couvercle se referme de lui-même à cause des mouvements oscillants du creuset ainsi que décrit dans les demandes de brevet susmentionnées.

Le creuset comporte avantageusement une déformation en forme de cheminée (CH) pour faciliter l'échappement des gaz; étant donné les contraintes subies par le couvercle, il est avantageux d'utiliser un alliage de platine et de rhodium à, par exemple, 10% pour que le couvercle soit moins déformable que s'il était en platine pur.

Pour utiliser pleinement les avantages de l'automatisme, il est avantageusement réalisé, avec des moyens connus du genre tapis transporteur (MA–FS), figure 5, un dispositif de transfert pour transférer la perle obtenue après fusion et refroidissement à partir de la «perleuse» (F) jusqu'au spectromètre (S) par exemple le modèle «PW 1600/10» commercialisé par la demanderesse; ainsi l'ensemble de pesée (BA), la perleuse (F), le spectromètre (S) avec les dispositifs de transfert associés bras manipulateur (MA–NP) et tapis transporteur (MA–FS) constituent un tout automatique synchronisé et contrôlé par un calculateur (CA) pourvu de moyens de transmissions (MT) pour recevoir, traiter et mémoriser les résultats des diverses opérations dont notamment les pesées, ou dosage, et les analyses; les paramètres prédéterminés nécessaires à ces opérations peuvent être fournis au moyen d'un clavier (CLA) et les résultats transcrits sur une imprimante (I) ou un écran de visualisation; les résultats peuvent aussi être utilisés pour un asservissement automatisé de la fabrication du produit analysé.

Dans la machine automatique ainsi réalisée (Figure 5) la séquence totale des opérations dure à peu près onze minutes; cette durée dépend notamment des choix effectués parmi les cinq programmes de pesée possibles, parmi les six programmes de fusion possibles et encore parmi la soixantaine de programmes de mesure du spectromètre; l'analyse effectuée par le spectromètre a une durée relativement courte et de ce fait il est avantageux que le calculateur ne bloque pas le spectromètre pendant les opérations de pesée et de fusion afin de le libérer pour démarrer d'autres utilisations de cet appareil qu'il est avantageux de rentabiliser au maximum.

**Revendications**

1. Procédé automatique de dosage continu, en poids, d'un mélange composé d'un échantillon à analyser et d'un fondant, par exemple du tétraborate de lithium, le dit mélange étant destiné à être fondu dans un creuset pour après refroidissement former une solution solide appelée «perle», le dit échantillon étant collant, le dit mélange devant avoir un rapport en poids prédéterminé RFEC entre fondant et échantillon, caractérisé en ce que le dosage en poids s'effectue dans une nacelle de pesée selon les étapes suivantes:

a) alimentation en fondant pour un poids-cible FC1

b) alimentation en échantillon pour un poids-cible EC prédéterminé

d) alimentation en fondant pour un poids-cible FC2

– le rapport

$$\frac{FC1 + FC2}{EC}$$

étant égal à la dite valeur cible prédéterminée RFEC

– le poids-cible FC1 étant égal aux quatre cinquièmes du poids-cible total de fondant c'est-à-dire FC1 = 4/5 × RFEC × EC ces trois étapes étant choisies pour profiter des angles de talus d'éboulement respectifs du fondant et de l'échantillon de sorte que:

l'échantillon ne soit pas en contact avec la dite nacelle de pesée pendant le pesage et en ce que le mélange ainsi dosé est ensuite versé dans un creuset par basculement de la nacelle, l'échantillon étant suffisamment enrobé de fondant pour ne pas coller à la nacelle, de telle sorte que le procédé n'utilise qu'une seule nacelle et un seul creuset.

2. Procédé automatique de dosage selon la revendication 1 caractérisé en ce que le dosage en cours est automatiquement abandonné si le système de pesage en continu mesure un excès en poids soit en échantillon soit en fondant compte tenu des tolérances prédéterminées admises.

3. Procédé automatique de dosage selon les revendications 1 ou 2 caractérisé en ce que d'une part l'étape b) est décomposée en deux étapes à savoir

b') alimentation à vitesse rapide de l'échantillon pour un poids-cible EC1 égal à une fraction, par exemple un tiers, du poids-cible EC

c) alimentation à vitesse lente de l'échantillon pour un poids-cible EC2 égal au complément de la fraction EC1, donc par exemple deux tiers, du poids-cible EC d'autre part l'étape d) est décomposée en deux étapes à savoir

d') alimentation à vitesse rapide du fondant pour un poids-cible FC21 égal à une fraction, par exemple trois quarts, du poids-cible FC2, la vitesse de l'étape a), étant alors égale à la vitesse rapide de l'étape d')

e) alimentation à vitesse lente du fondant pour un poids-cible FC22 égal au complément de la fraction FC21, donc par exemple un quart, du poids-cible FC2 de telle sorte que le dosage soit plus précis pour respecter des tolérances de dosage prédéterminées, les dites tolérances étant par exemple exprimées en comparant la valeur-cible prédéterminée RFEC avec la valeur obtenue RFEO.

4. Procédé automatique de dosage selon la revendication 3 caractérisé en ce que s'il se produit un excès d'alimentation pendant l'étape c) ou pendant l'étape e), le dosage en cours est abandonné par vidange totale du contenu de la nacelle de pesée pour pouvoir recommencer un nouveau dosage.

5. Machine automatique de dosage pour doser un échantillon et son fondant pour la mise en œuvre du procédé selon l'une quelconque des revendications précédentes comportant

   – un système de pesage en continu
   – une trémie d'alimentation du fondant avec vibreur et goulotte
   – une trémie d'alimentation de l'échantillon avec vibreur et goulotte
   – un automate de commande du processus de pesée
   – un four à induction d'un modèle connu avec creuset et couvercle de creuset pivotant autour d'un axe horizontal

caractérisée en ce qu'elle comporte en outre un dispositif de transfert, aussi appelé bras manipulateur, pour premièrement transférer la nacelle de pesée avec son mélange dosé à partir de son emplacement de pesée jusqu'au-dessus du creuset de fusion, deuxièmement basculer la nacelle pour renverser le mélange dosé en donnant des secousses à la dite nacelle et troisièmement ramener la nacelle à son emplacement de pesée, en ce qu'un seul creuset en carbone vitreux est utilisé, en ce que le couvercle du creuset est de préférence en alliage de platine et de rhodium à, par exemple, 10%, le dit couvercle comportant une cheminée pour le dégagement des gaz et un becquet, en ce que le dit bras manipulateur de la nacelle comporte des moyens du genre ergot pour, au moment du transfert de la nacelle, et, par action sur le dit becquet du couvercle, ouvrir le couvercle avant de procéder au versement du mélange.

6. Machine automatique selon la revendication 5 caractérisée en ce que l'ensemble mobile du bras manipulateur comporte en outre un dispositif mobile de support d'un entonnoir en acier inox poli intérieurement pour en s'interposant entre la nacelle et le creuset guider l'écoulement du mélange vers le fond du creuset et ainsi éviter au mélange d'être dispersé par les turbulences d'air chaud générées dans le creuset par la chaleur de la fusion du mélange précédent, le mouvement du dit entonnoir étant similaire à celui de la nacelle à ceci près que le dit dispositif mobile de support de l'entonnoir comporte des moyens premièrement pour escamoter horizontalement l'entonnoir lors de la pesée avec un dispositif de rappel de l'entonnoir, deuxièmement faire plonger verticalement l'entonnoir dans le creuset, troisièmement donner des secousses verticales à l'entonnoir après la phase du renversement de la nacelle pour que toutes les particules du mélange dosé tombent de l'entonnoir dans le creuset, l'ensemble de ces opérations étant commandées par l'automate de commande.

7. Machine automatique selon la revendication 6 caractérisé en ce qu'il comporte en outre un spectromètre de fluorescence des rayons X et un dispositif de transfert pour transférer chaque «perle», obtenue après fusion et refroidissement, du four au spectromètre, un calculateur avec des moyens de transmissions pour synchroniser et contrôler premièrement l'automate de contrôle de la machine de dosage, deuxièmement les moyens de transfert du mélange dosé à partir de la machine de dosage jusque dans le creuset, troisièmement le four à induction, quatrièmement les moyens de transfert de la «perle» à partir du four jusqu'au spectromètre, en ce que le dit calculateur reçoit via les dits moyens de transmissions toutes les informations nécessaires pour traiter et mémoriser, et le cas échéant éditer et/ou afficher, les résultats des pesées et des analyses.

8. Machine automatique selon la revendication 7 caractérisée en ce que la séquence totale des opérations dure à peu près onze minutes parmi lesquelles le spectromètre n'est utilisé que pendant une durée relativement courte, et en ce que le calculateur libère le spectromètre pour démarrer d'autres utilisations pendant les opérations de pesée et de fusion.

## Claims

1. An automatic continuous dosing method for dosing, in weight, a mixture of a sample to be analysed and a flux, for example lithium tetraborate, said mixture being intended to be melted in a crucible so as to form, after cooling, a solid solution which is referred to as a «bead», which sample is «sticky» and which mixture should have a predetermined ratio FEC, in weight, between flux and sample, characterized in that the weight dosing takes place in a weighing pan in the following stages:
   a) feeding with flux to a target weight FC1,
   b) feeding with sample to a predetermined target weight EC,
   d) feeding with flux to a target weight FC2,
   – the ratio

$$\frac{FC1 + FC2}{EC}$$

being equal to said predetermined target value RFEC
   – the target weight FC1 being equal to four fifths of the total target weight of the flux, i. e.

$$FC1 = \frac{4}{5} \times RFEC \times EC,$$

said three stages being selected so as to make optimum use of the angles of repose of the flux and the sample, respectively, in such a way that:
   the sample is not in contact with said weighing pan during weighing and the mixture thus dosed is subsequently applied to a crucible by rocking the pan, the sample being suitably covered by flux so as not to stick to the pan, so that the method utilizes only a single pan and a single crucible.

2. An automatic dosing method as claimed in Claim 1, characterized in that the dosing operation in progress is discontinued automatically if the continuous weighing system measures a surplus weight of sample or flux, taking into account predetermined permissible tolerances.

3. An automatic dosing method as claimed in Claim 1 or 2, characterized in that stage b) is divided into two stages, namely

b') fast-rate feeding with sample material to obtain a target weight EC1 equal to a fraction, for example a third, of the target weight EC, and

c) slow-rate feeding with sample material to obtain a target weight EC2 equal to the complement of the fraction EC1, i. e. for example two thirds, of the target weight EC,

and stage d) is divided into two stages, namely

d') fast-rate feeding with flux to obtain a target weight FC21 equal to a fraction, for example three quarters, of the target weight FC2, the feeding rate of stage a) then being equal to the fast rate of stage d'), and

e) slow-rate feeding with flux to obtain a target weight FC22 equal to the complement of the fraction FC21, for example a quarter, of the target weight FC2 in such a way that dosing is effected more precisely to comply with the predetermined dosing tolerances, said tolerances being, for example expressed through comparison of the predetermined target value RFEC with the obtained value RFEO.

4. An automatic dosing method as claimed in Claim 3, characterized in that in the case of excessive feeding in stage c) or in stage e) dosing is discontinued by discharging the entire contents of the weighing pan in order to recommence with a new dosing operation.

5. An automatic dosing apparatus for dosing a sample and its flux in order to carry out the method claimed in any one of the preceding Claims, which apparatus comprises

– a continuous weighin system,

– a flux-feeding hopper with vibrator and chute,

– a sample-feeding hopper with vibrator and chute,

– an automatic control device for the weighing process,

– an induction furnace of a known type comprising a crucible and crucible lid which is pivotable about a horizontal axis,

characterized in that it also comprises a transfer device, also referred to as manipulator arm, firstly for transferring the weighing pan with the dosed mixture from its weighing position to a position over the fusion crucible, secondly, for rocking and shaking the weighing pan to discharge the dosed mixture and thirdly for returning the pan to its weighing position, in that one crucible of vitreous carbon is used, in that the crucible lid is preferably made of an alloy of platinum and, for example, 10% of rhodium, said lid comprising a chimney for discharging gases and a projection, and in that the manipulator arm of the pan comprises pin-type means which, at the instant that the pan is transferred, cooperate with said projection on the lid to open the lid before the mixture is discharged.

6. An automatic apparatus as claimed in Claim 5, characterized in that the movable assembly with the manipulator arm also comprises a movable supporting device for an internally polished stainless-steel funnel which is arranged between the pan and the crucible to guide the flow of mixture towards the bottom of the crucible, thereby preventing the mixture from being dispersed by hot air turbulances caused in the crucible by the heat of fusion of the preceding mixture, the movement of said funnel being similar to that of the pan, except that said movable supporting device for the funnel comprises means, firstly for horizontally tilting the funnel by means of a funnel-return device during the weighing operation, secondly for vertically lowering the funnel into the crucible, and thirdly for shaking the funnel vertically after the pan has been tilted in order to ensure that all particles of the dosed mixture fall from the funnel into the crucible, all said operations being controlled by the automatic control device.

7. An automatic apparatus as claimed in Claim 6, characterized in that it also comprises an X-ray fluorescence spectrometer and a transfer device for transferring each «bead», obtained after fusion and cooling, from the furnace to the spectrometer, a computer with transmission means for synchronising and controlling firstly the automatic control device of the dosing apparatus, secondly the means for transferring the dosed mixture from the dosing apparatus to the crucible, thirdly the induction furnace, and fourthly the means for transferring the «bead» from the furnace to the spectrometer, said computer receiving, via said transmission means, all information necessary for processing and storing and, as the case may be, for editing and/or displaying the weighing and analysing results.

8. An automatic apparatus as claimed in Claim 7, characterized in that the entire sequence of operations has a duration of substantially eleven minutes, during which the spectrometer is used for only a comparatively short time, and in that the computer frees the spectrometer for starting other uses during the weighing and fusing operations.

**Patentansprüche**

1. Verfahren zur automatischen, gewichtsbestimmten Dauerzuteilung einer Mischung, bestehend aus einer zu analysierenden Probe und einem Flußmittel, beispielsweise aus Lithium-Tetraborat, wobei die Mischung zum Schmelzen in einem Tiegel und zur Bildung einer festen Lösung mit der Bezeichnung «Perle» nach dem Abkühlen bestimmt ist, die Probe klebrig ist, und die Mischung ein vorgegebenes Gewichtsverhältnis RFEC zwischen Flußmittel und Probe hat, dadurch gekennzeichnet, daß die Gewichtszuteilung in ein Wiegeschiffchen in nachstehenden Schritten erfolgt:

a) Flußmittelversorgung für ein Targetgewicht FC1,

b) Probenversorgung für ein vorgegebenes Targetgewicht EC,

d) Flußmittelversorgung für ein Targetgewicht FC2,

– wobei das Verhältnis

$$\frac{FC1 + FC2}{EC}$$

gleich dem vorgegebenen Targetwert RFEC ist,

– wobei das Targetgewicht FC1 gleich Vierfünftel des Gesamttargetgewichts des Flußmittels ist, d. h. FC1 = 4/5 × RFEC × EC, wobei die drei Schritte zum vorteilhaften Ausnutzen der Schüttwinkel des Flußmittels bzw. der Probe derart gewählt werden, daß die Probe beim Wiegen nicht mit dem Wiegeschiffchen in Kontakt ist, und daß anschließend durch Umkippen des Schiffchens die so zugeteilte Mischung in einen Schmelztiegel gebracht wird, wobei die Probe derart ausreichend in Flußmittel eingebettet ist, daß sie nicht am Schiffchen klebt, so daß beim Verfahren nur ein einziges Schiffchen und ein einziger Schmelztiegel erforderlich sind.

2. Verfahren zur automatischen Probenzuteilung nach Anspruch 1, dadurch gekennzeichnet, daß die laufende Zuteilung automatisch unterbrochen wird, wenn das Wiegesystem unter Berücksichtigung der vorgegebenen zulässigen Toleranzen eine Überdosis an Probenmaterial oder an Flußmittel feststellt.

3. Verfahren zur automatischen Probenzuteilung nach Anspruch 1 oder 2, dadurch gekennzeichnet, daß einerseits der Schritt b) in zwei Schritte unterteilt wird, d. h.

b') beschleunigte Probenversorgung für ein Targetgewicht EC1 gleich einem Bruchteil, wie z. B. einem Drittel, des Targetgewichts EC,

c) verzögerte Probenversorgung für ein Targetgewicht EC2 gleich dem Komplement des Bruchteils EC1, also zum Beispiel Zweidrittel, des Targetgewichts EC,

andererseits der Schritt d) in zwei Schritte unterteil wird, d. h.

d') beschleunigte Flußmittelversorgung für ein Targetgewicht FC21 gleich einem Bruchteil, wie z. B. Dreiviertel, des Targetgewichts FC2, wobei die Geschwindigkeit des Schritts a) also gleich der Beschleunigung des Schritts d') ist,

e) verzögerte Flußmittelversorgung für ein Targetgewicht FC22 gleich dem Komplement des Bruchteils FC21, also zum Beispiel einem Viertel, des Targetgewichts FC2 derart, daß die Zuteilung zum Einhalten der vorgegebenen Zuteilungstoleranzen genauer ist, und diese Toleranzen beispielsweise durch einen Vergleich des vorgegebenen Targetwerts RFEC mit dem abgeleiteten Wert RFEO ausgedrückt werden.

4. Verfahren zur automatischen Probenzuteilung nach Anspruch 3, dadurch gekennzeichnet, daß, wenn beim Schritt c) oder beim Schritt e) ein Versorgungsübermaß entsteht, die laufende Zuteilung durch vollständiges Entleeren des Wiegeschiffchens unterbrochen wird, um eine neue Zuteilung anfangen zu können.

5. Zuteilungsautomat zum dosierten Zuteilen einer Probe und ihres Flußmittels zur Durchführung des Verfahrens nach einem oder mehreren der vorangehenden Ansprüche, wobei der Automat

– ein Dauerwiegesystem,

– einen Flußmittelspeisetrichter mit Schwingungserzeuger und Auslauf,

– einen Probenspeisetrichter mit Schwingungserzeuger und Auslauf,

– einen Steuerautomaten für das Wiegeverfahren, und

– einen Induktionsofen eines bekannten Typs mit Schmelztiegel und Tiegeldeckel enthält, der um eine waagerechte Achse scharniert, dadurch gekennzeichnet, daß der Automat außerdem einen Übersetzer, auch mit Steuerhebel bezeichnet, ersten zum Übersetzen des Wiegeschiffchens mit seiner dosierten Mischung von der Wiegestelle bis über dem Schmelztiegel, zweitens zum Umkippen des Schiffchens für die Übergabe der dosierten Mischung bei gleichzeitigem mehrmaligem Anstossen dieses Schiffchens und drittens zum Zurückführen des Schiffchens in die Wiegestellung enthält, daß nur ein Schmelztiegel aus glasartigem Kohlenstoff verwendet wird, daß der Tiegeldeckel vorzugsweise aus einer Legierung von Platin und beispielsweise 10% Rhodium besteht, wobei der Deckel einen Gasabzug für die Entgasung und eine Lippe enthält, daß der Steuerhebel des Schiffchens nockenartige Mittel zum Öffnen des Deckels zum Zeitpunkt der Übersetzung des Schiffchens und durch Bedienung der Deckellippe vor dem Übergeben der Mischung enthält.

6. Zuteilungsautomat nach Anspruch 5, dadurch gekennzeichnet, daß die Bewegungseinheit des Steuerhebels außerdem eine Bewegungseinrichtung zum Tragen eines innenpolierten Trichters aus rostfreiem Stahl bei Aufstellung zwischen dem Schiffchen und dem Schmelztiegel zum Führen des Mischungsausflusses zum Tiegelboden und weiter zum Vermeiden enthält, daß die Mischung durch die Heißluftwirbelungen im Tiegel infolge der Schmelzhitze der vorigen Mischung zerstreut wird, wobei die Bewegung des Trichters gleich der des Schiffchens ist, mit der Ausnahme, daß die Bewegungseinrichtung des Trichterträgers erstens Mittel zum horizontalen Einziehen des Trichters beim Wiegen mit einer Trichterrückstellvorrichtung, zweitens zum vertikalen Einführen des Trichters in den Tiegel, und drittens zum Anstossen des Trichters in vertikaler Richtung nach der Phase des Umkehrens des Schiffchens enthält, damit alles Material der dosierten Mischung durch den Trichter in den Tiegel fällt, wobei alle Handlungen durch den Steuerautomaten erfolgen.

7. Zuteilungsautomat nach Anspruch 6, dadurch gekennzeichnet, daß er weiter noch einen Röntgenfluoreszenzspektrographen und eine Transportvorrichtung zum Befördern jeder nach der Schmelzung und dem Erkalten erhaltenen Perle vom Ofen nach dem Spektrographen und einen Rechner mit Übertragungsmitteln zum Synchronisieren und Steuern erstens des Steuerautomaten des Zuteilungsautomaten, zweitens der Übersetzungsmittel für die dosierte Mischung aus dem Zuteilungsautomaten bis in den Tiegel, drittens des Induktionsofens und viertens der Transportvorrichtung für die «Perle» vom Ofen nach dem Spektrographen enthält, daß dieser Rechner über die Übertragungsmittel alle erforderlichen Informationen zum Bearbeiten und Speichern, und vorkommendenfalls zum Ausgeben und/oder Anzeigen der Wiege- und Analyse-Ergebnisse empfängt.

8. Zuteilungsautomat nach Anspruch 7, dadurch gekennzeichnet, daß die Gesamtheit der Operationen eine Dauer von fast elf Minuten hat, in der der Spektrograph nur während einer verhältnismäßig kurzen Zeitspanne benutzt wird, und daß der Rechner den Spektrographen zum Starten anderer Anwendungen während der Wiege- und Schmelzoperationen freigibt.

FIG.1

FIG.4

NP(2)    MA-NP    NP(1)

P

ER

CO

ET

CR

BA

FIG.2

P

NP

ET

ER

MA-NP

FIG.3

FIG.5